# EUROPEAN PATENT SPECIFICATION

(11) **EP 3 575 370 B1**
(45) Date of publication and mention of the grant of the patent: **20.10.2021**
(21) Application number: 18203909.9
(22) Date of filing: 01.11.2018
(51) Int. Cl.: C09D 5/00

(54) **EMULSION RESIN COMPOSITIONS SYNTHESIZED WITH POLYMERIC SOAP**
MIT POLYMERSEIFE SYNTHETISIERTE EMULSIONSHARZZUSAMMENSETZUNGEN
COMPOSITIONS D'ÉMULSION DE RÉSINE SYNTHÉTISÉES AVEC DU SAVON POLYMÈRE

(30) Priority: 01.06.2018 TR 201807801
(43) Date of publication of application: 04.12.2019
(73) Proprietor: Kansai Altan Boya Sanayi ve Ticaret Anonim Sirketi, Izmir (TR)
(72) Inventor: GAFFAROGULLARI, Murat, IZMIR (TR)
(74) Representative: Sevinç, Cenk

(56) References cited:
- CN-A- 106 752 444
- US-A1- 2004 259 981
- US-A1- 2014 024 740

## Description

### Related Technical Field

The present invention relates to acrylic monomer-based emulsion resin mixtures that are produced by emulsion polymerization technique and of which particle structure is reinforced against mechanical and chemical effects by means of polymeric soap and that is used in the field of surface coatings and particularly in coating applications performed with roller on wooden flat panel surfaces.

### State of the Art

Acrylic resins can be classified as thermoplastic and thermoset resins. Thermoplastic acrylic resins are heat-softenable resins. Thermoplastic acrylic resins are of high quality in terms of characteristics such as color and gloss, alkali and oxidation resistance, hardness, adhesion and film life and they occupy an important position among coating formulas.

Acrylic resins are produced through different processes and for different purposes. Basically, there are four different production processes;
- Emulsion polymerization process
- Water dilution process
- Polymer dispersion process in non-aqueous media
- Thermoplastic and thermoset resin production process in solvent

Emulsion polymerization technique is a process intended for preparing polymers in aqueous dispersion. Resin compositions obtained through emulsion polymerization are nature friendly waterborne resins. Polymerization materializes within independent surfactant (surface active agent) micelles and a dispersion comprising particles having 0.01-0.5-micron radius emanates as a result.

Although the method of emulsion polymerization is being used in polymer production for years, it still hasn't been entirely illuminated due to kinetics of the reaction mechanism, complexity of the heterogeneous medium, plenty of the materials added to the system, occurrence of varied physical and chemical events within the same system.

Generally, water is used as emulsion medium in emulsion polymerization. Monomers are dispersed within this medium by means of an emulsifying surfactant agent. Hydrophilic and hydrophobic groups are present in the molecular structure of the surfactant agent. Apart from these fundamental components, various substances are present within the emulsion system. For instance, mercaptan compounds are added in order to control the polymer molecular weight. Depending on the polymer system, potassium persulfate, sodium metabisulphite, ammonium persulfate, etc. are used as catalyst.

In existing applications, surfactant structure which is the most important component used in emulsion polymerization is APEO. (Alkylphenol Ethoxylate). Commonly used APEO structured surfactant has quite a lot of negative effects on human health. Furthermore, the selection of surfactants utilized in emulsion polymerization should be made based on the composition of acrylic monomers to be used in emulsion polymerization.

Another surfactant (surface active agent) used in emulsion polymerization in available applications is styrene-acrylic based polymeric soap. In emulsions in which polymeric soap is used as a surfactant, in order for polymer to function as soap, it should be neutralized in a stage of the synthesis reaction. And in order for the neutralization process to actualize, polymeric soap should be transmuted into salt structure by subjecting it to a reaction with a base such as sodium hydroxide, ammonia, dimethylethanolamine or triethylamine.

In present applications in which polymeric soap is used as surfactant, only APEO with nonionic characteristic of APEO and sodium lauryl sulfate are used as surfactants in order to ensure the emulsion stability, in addition to styrene-acrylic based polymeric soap that is less than 20% by mass. Since used polymeric soap amount is less than 20% by mass, water resistance of the polymer is low, and this results in negative outcomes.

In another state of the art, APEO and alpha olefin maleic anhydride are utilized as surfactants in order to ensure the emulsion stability. In cases where alpha olefin maleic anhydride is used, because amount of use of the polymeric soap used as surfactant remains below 10% by mass and the fact that soap has to be transmuted into salt structure through sodium hydroxide, water resistance of the coating film is low.

The invention disclosed in the patent application bearing the number of **"**CN102137877A**"** in the state of the art relates to a monomer mixture comprising one or more alkyl (meth) acrylate in the ratio of 30% at the minimum by weight, polymers obtained by means of the aforesaid monomer mixture and coating agents comprising the said polymer.

The invention bearing the number of **"**CN1162324A**"** examined in the preliminary research conducted with regard to the state of the art, relates to a waterborne polymeric dispersion and the said dispersion comprises different types of monomers.

Consequently, due to the problems described above and the inadequacy of available solutions in providing scrub resistance on surfaces where the emulsion resin is applied, stackability, resistance to water and household chemicals and in the optimization of the amount of coating film necessitated an improvement to be made in the related technical field.

### Objects of the Invention

The object of the present invention, is to utilize the synthesized emulsion resin mixture in the field of surface coatings and particularly in coating film applications performed with roller on wooden flat panel surfaces.

It is thus an object of the present invention to increase water resistance of the coating by using styrene acrylic-based polymeric soap having more than 20% of solid material as surfactant for synthesizing acrylic monomer-based emulsion resin mixture produced by means of emulsion polymerization technique.

It is therefore an object of the present invention to make resins to be obtained by means of using polypropylene oxide, polyethylene oxide block copolymer nonionic soaps for synthesizing emulsion resin mixtures in which polymeric soap is used more than 20% by mass as surfactant more environment-friendly.

It is thus an object of the present invention to eliminate the negative effects constituted by the surfactant on human health by utilizing APEO-free surfactant in synthesizing of the emulsion resin composition.

### Disclosure of the Invention

The present invention relates to acrylic monomer-based emulsion resin mixtures that are produced by emulsion polymerization technique and of which particle structure is reinforced against mechanical and chemical effects by means of polymeric soap and that is used in the field of surface coatings and particularly in coating applications performed with roller on wooden flat panel surfaces.
- In the method, styrene acrylic-based polymeric soap to be in an amount between 5-25 gr in which the solid material ratio is used in such a way that it will be more than 20% of solid material, polypropylene oxide-polyethylene oxide block copolymer APEO-free nonionic soap surfactant in an amount of 0.01-7 gr are used as surfactant.

Other substances used in obtaining of emulsion resin composition are;
- Acrylic or methacrylic acid to be in an amount between 0-10 gr which is one of the monomers that forms the polymer structure at the end of the reaction,
- Deionized water as reaction medium to be in an amount between 75-130 gr,
- A mixture in an amount between 0-20 gr, consisting of one or more of the bases of sodium hydroxide, ammonium, dimethylethanolamine, triethylamine for the neutralization of the polymeric soap,
- A composition consisting of the mixtures of one, several or all of styrene in an amount between 20-80 gr which is the hydrophobic component of the acrylic emulsion resin, alpha-methyl styrene, hydrophobic monomers of the vinyl toluene group,
- One or a mixture of ethyl hexyl, butyl, isobornyl, methyl acrylate or of its methacrylates in an amount between 10-30 gr which is the hydrophilic component of the acrylic emulsion resin,
- As oxidizer; a composition in an amount between 0.1 - 0.5 gr consisting of the mixture of one or several or all of selected out of ammonium, sodium or potassium persulfate compounds,
- Mineral oil or silicon-based antifoam compound in an amount between 0 - 0.05 gr, antibacterial agent in an amount between 0.010 - 0.3 gr and polypropylene glycol in an amount between 0.01 - 0.3 gr which is a surface-active infusing agent that improves the film forming capability of emulsion resin compositions and that facilitates the packaging operation by preventing the foam formation.

In the method, water resistance of coating film to be provided by the polymer is increased by means of using styrene-acrylic resin based polymeric soap in such a way that the solid material amount will be higher than 20%. By means of this method, obtaining of emulsion resin composition can be performed in an environment-friendly manner by utilizing polypropylene oxide-polyethylene oxide block copolymer nonionic soaps.

The method for obtaining emulsion resin composition is performed within two cylindrical reactors having similar volumes, wherein one of the reactors comprises a mixing device while the other reactor comprises a heating and cooling device. The method implemented in obtaining of monomer-based emulsion resin composition comprises the process steps of;
- Forming the monomer mixture and mixing by adding styrene which contributes to the water resistance of flat wooden panel paint which is the end-use area of the emulsion resin, one or a mixture of aforesaid hydrophilic acrylic monomers that provides flexibility of the paint, one or a mixture of hydrophilic monomers that allows the transfer amount to be at a desired level by changing the polymer of the coating to aqueous phase during the painting process of the wooden panel and acrylic or methacrylic acid that provides electrostatic stability during the emulsion polymerization and the use of polymer respectively to the first reactor,
- Rendering nonionic surfactant and deionized water solution homogeneous that forms water-swellable layer by hydrating on the emulsion particle, that provides structural stability by preventing particles from precipitating on one another, and that increases the stability against emulsion shear forces, mechanical and chemical effects in the first auxiliary tank prior to or simultaneously with or after the forming of monomer mixture in the first reactor and mixing it inside the reactor;
- Rendering ammonium persulfate and deionized water solution homogeneous through mixing which is the source of water-soluble initiator ions for the radical polymerization reaction and that constitutes the radical formation by cracking thermally within the reaction in the second auxiliary tank prior to or simultaneously with or after the forming of monomer mixture in the first reactor and mixing it inside the reactor,

- Adding and heating the deionized water to 60-80 °C used as a reaction medium in the emulsion polymerization to the second reactor which is the main reactor in which the reaction will actualize,
- Adding the nonionic surfactant and the deionized water mixture contained inside the first auxiliary tank to second reactor,
- Adding the solid polymeric soap surfactant and the neutralization base to the second reactor at 60-80 °C,
- Heating the second reactor until it reaches to 70-90 °C,
- Waiting for the material in solid form to dissolve, adding ammonium persulfate - water solution contained inside the second auxiliary tank to second reactor and keep operating for 30 minutes at 70-90 °C,
- Dosing the monomer mixture contained inside the first reactor to second reactor in 1-6 hours and at 70-90 °C,
- Operating for 30 mins-lhr at 70-90 °C pursuant to the termination of dosing,
- Adding the ammonium persulfate and water solution to be prepared in mixing tank to the second reactor and keep operating for 30mins-1hr at 70-90 °C,
- Cooling the second reactor down until it drops down to 20-50 °C, adding and mixing antibacterial agent and the rest of the formula consisting of surface active infusers that provide the film forming capability and commencing filtration at this temperature.

Subject matter invention resin composition obtained the method is used mixed together with alkali-soluble emulsion resin mixtures that are neutralized in an appropriate amount (by seeking viscosity, solid material and other parameters) in painting applications of flat wooden panels.

**Table 1 Optimization Test Results**

| **Dye Tests** | **Result** | **Test Description** |
|---|---|---|
| Glass Diffusion | Equal to Ref | Side-By-Side application with reference through 30-micron bar applicator. Visual check result reporting. |
| Water and Scrubbing | Equal to Ref | Applying to glass with water-saturated medical cotton by 30-micron applicator and scrubbing on kiln-dried cold surface. Reporting the difference of up-down motion number from the reference performed until the surface dissolve. |
| Viscosity D6/20°C | Equal to Ref | Measuring viscosity at 20 degrees with DIN 6 container. Reporting the difference of duration between the start and cease of the flow from the reference dye. |
| Solid % | 66.5 | Drying for 2 hours with 1.5 gr material in kiln at 120 degrees. Reporting the ratio between the initial material amount and the amount after kilning |
| Hiding Power | Equal to Ref | Side-By-Side application with reference through 30-micron bar applicator. Reporting visual check result upon black and white zebra paper. |
| Resistance to cold liquids, water | 5 | Resistance to mixtures of water, oil, water/alcohol and coffee according to ISO EN 12720. Reporting 24h resistance results on a scale of 1 to 5. |
| Resistance to cold liquids, water | >4 | Resistance to mixtures of water, oil, water/alcohol and coffee according to ISO EN 12720. Reference Value |
| Resistance to cold liquids, oil | 5 | Resistance to mixtures of water, oil, water/alcohol and coffee according to ISO EN 12720. Reporting 24h resistance results on a scale of 1 to 5. |
| Resistance to cold liquids, oil | >4 | Resistance to mixtures of water, oil, water/alcohol and coffee according to ISO EN 12720. Reference Value |
| Resistance to cold liquids, coffee | 5 | Resistance to mixtures of water, oil, water/alcohol and coffee according to ISO EN 12720. Reporting 1h resistance results on a scale of 1 to 5. |
| Resistance to cold liquids, coffee | >4 | Resistance to mixtures of water, oil, water/alcohol and coffee according to ISO EN 12720. Reference Value |
| Film Forming | Equal to Ref | Examination of paint's film structure applied to glass side-by-side with the reference by 15-micron applicator at different gradual temperatures. |

| **Application Tests** | | |
|---|---|---|
| Transfer gr/m2 | Equal to Ref | Setting dosing roller's direction of rotation, pressure and application roller's pressure and comparing the transfer amount per unit area with the reference. Reporting application amount difference as g/m2. |
| Bute | Equal to Ref | Comparing surface diffusion in equal roller application values (application amount and roller set values) to the reference. Visual check result reporting. |

## Claims

1. Acrylic monomer-based emulsion resin mixtures that are used in the field of surface coatings and particularly in coating applications performed with roller on wooden flat surfaces, wherein deionized water, polymeric soap, anionic soap obtained through emulsion polymerization technique is used and wherein styrene, ethyl hexyl acrylate and ammonium persulfate is used as base for neutralization, **characterized by** comprising;
• at least one of APEO-free nonionic surfactants and/or polymeric soap and/or sodium lauryl sulfate (SLS) anionic surfactants wherein the polymeric soap is neutralized with a neutralizing base,
• one or a mixture of comprising more than one of the acrylic monomers of methacrylic acid, acrylic acid, methyl methacrylate, styrene, butyl acrylate, ethyl acrylate and ethyl hexyl acrylate that forms the polymer structure at the end of the reaction in an amount between 0-10 gr,
• deionized water used as reaction medium in an amount between 75 - 130 gr,
• at least one neutralization base that can be one of sodium hydroxide, ammonium, dimethylethanolamine, triethylamine in an amount between 0 - 20 gr required for the neutralization of polymeric soap surfactant,
• one or several of the monomers of styrene, alpha-methyl styrene, vinyl toluene in an amount between 20-80 gr that contributes to the water resistance of paint,
• at least one of ethyl hexyl, ethyl, methyl butyl, isobornyl, methyl acrylate or methacrylate in such a way that it can be in an amount between 10-30 gr that provides the flexibility of the paint, ammonium persulfate in such a way that it can be in an amount between 0.1-0.5 gr which is the source of water-soluble initiator ions for the radical polymerization reaction,
• antifoam agent to be in an amount between 0 - 0.05 gr,
• antibacterial agent to be in an amount between 0.010-0.3 gr,
• Polyglycol derivatives in an amount between 0.01-0.3 gr that improves the film forming capability of emulsion resin compositions.

2. Method implemented in obtaining of acrylic monomer-based emulsion resin composition, **characterized by** comprising the process steps of;
• Forming a monomer mixture by means of adding the mixture formed with one or several of the monomers of alpha methyl styrene, one or several of the acrylates and methacrylates of ethyl hexyl, ethyl, methyl butyl, isobornyl, one of the monomers of acrylic or methacrylic acid to the first reactor and mixing,
• Rendering nonionic surfactant and deionized water solution homogeneous by mixing it prior to or simultaneously with or after the forming and mixing of monomer mixture inside the first reactor,
• Rendering ammonium persulfate and deionized water solution homogeneous by mixing inside the second auxiliary tank in such a way that it can be prior to or simultaneously with or after the forming and mixing of monomer mixture inside the first reactor,
• Adding deionized water to the second reactor which is the main reactor in which the reaction will actualize and heating the reactor until it reaches to 60-80 °C,
• Adding the nonionic surfactant and the deionized water mixture contained inside the first auxiliary tank to second reactor,
• Adding the solid polymeric soap surfactant and the neutralization base to the second reactor at 60-80 °C,
• Heating the second reactor until it reaches to 70-90 °C and waiting for material in solid form to dissolve,
• Adding ammonium persulfate - water solution contained inside the second auxiliary tank to second reactor and keep operating for 30 minutes - 1 hour at 70-90 °C,
• Dosing the monomer mixture contained inside the first reactor to second reactor in 1-6 hours and at 70-90 °C,
• Operating for 30 minutes - 1 hour at 70-90 °C pursuant to the termination of dosing,
• adding the ammonium persulfate and water solution to be prepared in a tank to the second reactor and keep operating for 30 minutes - 1 hour at 70-90 °C,
• Cooling the second reactor down until it drops down to 20-50 °C, adding and mixing antibacterial agent and the rest of the formula consisting of surface active infusers that provide the film forming capability and commencing filtration at this temperature.

## Patentansprüche

1. Emulsionsharz-Mischungen auf der Basis von Acryl-Monomeren, die im Bereich der Oberflächen-Beschichtungen und insbesondere bei Beschichtungs-Anwendungen mit der Rolle auf flachen Holz-Oberflächen durchgeführt werden, verwendet werden, wobei deionisiertes Wasser, polymere Seife, anionische Seife, die durch Emulsionspolymerisations-Technik erhalten wurde, verwendet wird und wobei Styrol, Ethylhexylacrylat und Ammoniumpersulfat als Basis für die Neutralisation verwendet wird, **gekennzeichnet durch** es umfasst;
• mindestens eines der APEO-freien nichtionischen Tenside und/oder polymeren Seifen und/oder Natriumlaurylsulfat (SLS) anionischen Tenside wobei die polymere Seife mit einer neutralisierenden Base neutralisiert wird,
• ein oder ein Gemisch enthaltend mehr als eines der Acrylmonomere von Methacrylsäure, Acrylsäure, Methylmethacrylat, Styrol, Butylacrylat, Ethylacrylat und Ethylhexylacrylat, welches die Polymerstruktur am Ende der Reaktion bildet, in einer Menge zwischen 0-10 g,
• deionisiertes Wasser, das als Reaktionsmedium verwendet wird, in einer Menge zwischen 75-130 g,
• mindestens eine neutralisierende Base, welche eine von Natriumhydroxid, Ammonium, Dimethylethanolamin, Triethylamin sein kann, in einer Menge zwischen 0 - 20 g, die für die Neutralisierung des polymeren Seifen-Tensids erforderlich ist,
• eines oder mehrere der Monomeren von Styrol, Alpha-Methylstyrol, Vinyltoluol, in einer Menge zwischen 20-80 g, die zur Wasserbeständigkeit der Farbe beiträgt,
• mindestens eines von Ethylhexyl, Ethyl, Methylbutyl, Isobornyl, Methylacrylat oder Methacrylat so dass es in einer Menge zwischen 10-30g sein kann, welche die Flexibilität der Farbe gewährleistet, Ammoniumpersulfat so dass es in einer Menge zwischen 0.1-0.5 g sein kann, welche die Quelle der wasserlöslichen Initiator-Ionen für die radikalische Polymerisationsreaktion ist,
• Antischaummittel in einer Menge zwischen 0 und 0.05 g,
• antibakterielles Mittel in einer Menge zwischen 0.010-0.3 g,
• Polyglykol-Derivate in einer Menge zwischen 0.01-0.3 g, welche die filmbildende Fähigkeit von Emulsionsharz-Zusammensetzungen verbessert.

2. Verfahren zum Erhalten einer Emulsionsharz-Zusammensetzung auf der Basis von Acrylmonomeren, **gekennzeichnet durch** die folgenden Verfahrensschritte, **gekennzeichnet durch** es die folgenden Verfahrensschritte umfasst;
• Bilden einer Monomer-Mischung durch Zugabe der mit einem oder mehreren der Monomere von Alpha-Methyl-Styrol, einem oder mehreren der Acrylate und Methacrylate von Ethylhexyl, Ethyl, Methylbutyl, Isobornyl, einem der Monomere von Acryl oder Methacrylsäure gebildeten Mischung in den ersten Reaktor und Mischen,
• Erbringung einer homogenen Lösung von nichtionischem Tensid und deionisiertem Wasser durch Mischen dieser Lösung vor oder gleichzeitig mit oder nach der Bildung und dem Mischen der Monomer-Mischung im ersten Reaktor,
• Erbringung einer homogenen Lösung von Ammoniumpersulfat und deionisiertem Wasser durch Mischen im zweiten Zusatztank, so dass dieses vor, gleichzeitig mit oder nach der Bildung und dem Mischen der Monomer-Mischung im ersten Reaktor sein kann,
• Zugabe von deionisiertem Wasser in den zweiten Reaktor, der als Hauptreaktor dient ist, in welchem die Reaktion stattfindet, und Erhitzen des Reaktors bis auf 60-80°C,
• Zugabe der in dem ersten Zusatztank enthaltenen nichtionischen Tensiden und deionisiertem Wasser zum zweiten Reaktor,
• Zugabe von festem polymerem Seifen-Tensid und der neutralisierenden Base in den zweiten Reaktor bei 60-80°C,
• Erhitzen des zweiten Reaktors auf 70-90° C, und Abwarten, bis sich das Material in fester Form gelöst hat,
• Zugabe der in dem zweiten Zusatztank enthaltenen Ammoniumpersulfat-Wasserlösung zum zweiten Reaktor und Weiterbetrieb für 30 Minuten-1 Stunde bei 70-90°C,
• Dosierung der im ersten Reaktor enthaltenen Monomer-Mischung zum zweiten Reaktor in 1-6 Stunden und bei 70-90°C,
• Betrieb für 30 Minuten-1 Stunde bei 70-90° C infolge der Beendigung der Dosierung,
• Zugabe der Lösung von Ammoniumpersulfat und Wasser, die in einem Tank zu bereiten ist, zum zweiten Reaktor und Weiterbetrieb für 30 Minuten-1 Stunde bei 70-90°C,
• Kühlen des zweiten Reaktors herunter auf 20-50°C, Zugabe und Mischen des antibakteriellen Mittels und des Rests der Formel, der aus oberflächenaktiven Infusoren besteht, welche die filmbildende Fähigkeit gewährleisten, und Beginn der Filtration bei dieser Temperatur.

## Revendications

1. Mélanges de résines en émulsion à base de monomère acrylique qui sont utilisés dans le domaine des revêtements de surface et en particulier dans les applications de revêtement pratiquée avec un rouleau sur des surfaces planes en bois, dans lesquels l'eau désionisée, le savon polymère, le savon anionique obtenus par la technique de polymérisation en émulsion est utilisé et dans lesquels le styrène, l'acrylate d'éthylhexyle et le persulfate d'ammonium est utilisé comme base pour la neutralisation, **caractérisé en ce qu'**il comprend ;
• au moins l'un des tensioactifs non ioniques sans APEO (éthoxylates d'alkylphénol) et/ou du savon polymérique et/ou des tensioactifs anioniques du laurylsulfate de sodium (LSS) dans lequel le savon polymérique est neutralisé avec une base neutralisante,
• l'un ou bien un mélange comprenant plus d'un des monomères acryliques de l'acide méthacrylique, de l'acide acrylique, du méthacrylate de méthyle, du styrène, de l'acrylate de butyle, de l'acrylate d'éthyle et de l'acrylate d'éthylehexyle qui forme la structure polymérique à la fin de la réaction dans une quantité comprise entre 0-10 gr,
• l'eau désionisée utilisée comme le milieu réactionnel dans une quantité comprise entre 75-130 gr,
• au moins une base de neutralisation qui peut être l'un de l'hydroxyde de sodium, de l'ammonium, du diméthylaminoéthanol, da la triéthylamine dans une quantité comprise entre 0-20 gr requise pour la neutralisation du tensioactif de savon polymérique,
• l'un ou plusieurs des monomères du styrène, de l'alpha-méthylstyrène, du vinyltoluène dans une quantité comprise entre 20-80 gr qui contribue à la résistance à l'eau de la teinture,
• au moins l'un de l'éthylhexyle, l'éthyle, le méthylbutyle, l'isobornyle, l'acrylate ou le méthacrylate de méthyle de telle sorte qu'il puisse être dans une quantité comprise entre 10-30 gr qui assure la flexibilité de la teinture, le persulfate d'ammonium de telle sorte qu'il puisse être dans une quantité comprise entre 0.1-0.5 gr qui est la source des ions initiateurs hydrosolubles pour la réaction de polymérisation radicalaire,
• agent antimousse dans une quantité comprise entre 0 - 0.05 gr,
• agent antibactérien dans une quantité comprise entre 0.010-0.3 gr,
• dérivés de polyglycols dans une quantité comprise entre 0.01-0.3 gr qui améliore la capacité de formation de film des compositions de résines en émulsion.

2. Procédé mis en oeuvre pour obtenir une composition de résines en émulsion à base de monomère acrylique, **caractérisé en ce qu'**il comprend les étapes de procédé suivantes ;
• Former un mélange de monomères par l'ajout du mélange formé avec l'un ou plusieurs des monomères d'alpha méthylstyrène, l'un ou plusieurs des acrylates et méthacrylates d'éthylhexyle, d'éthyle, de méthyl butyle, d'isobornyle, l'un des monomères d'acide acrylique ou méthacrylique au premier réacteur et mélanger,
• Rendre la solution de tensioactif non ionique et d'eau désionisée homogène en la mélangeant avant ou simultanément, ou bien après la formation et le mélange du mélange de monomères dans le premier réacteur,
• Rendre la solution de persulfate d'ammonium et d'eau désionisée en la mélangeant dans la deuxième cuve auxiliaire de telle sorte qu'il puisse être avant ou simultanément, ou bien après la formation et le mélange du mélange de monomères dans le premier réacteur,
• Ajouter l'eau désionisée au deuxième réacteur qui est le réacteur principal dans lequel la réaction s'effectuera et chauffer le réacteur jusqu'à ce qu'il atteigne 60-80 °C,
• Ajouter le mélange de tensioactif non ionique et d'eau désionisée contenu dans la premier cuve auxiliaire vers le deuxième réacteur,
• Ajouter le tensioactif de savon polymérique solide et la base de neutralisation au deuxième réacteur à 60-80°C,
• Chauffer le deuxième réacteur jusqu'à ce qu'il atteigne 70-90 °C et attendre pour que le matériau sous forme solide se dissolve,
• Ajouter la solution de persulfate d'ammonium et d'eau contenue dans la deuxième cuve auxiliaire au deuxième réacteur et le maintenir fonctionnant pendant 30 minutes - 1 heure à 70-90 °C,
• Doser le mélange de monomères contenu dans le premier réacteur vers le deuxième réacteur en 1-6 heures et à 70-90 °C,
• Le fonctionner pendant 30 minutes - 1 heure à 70-90 °C suite à l'achèvement du dosage,
• Ajouter la solution de persulfate d'ammonium et d'eau à préparer dans une cuve vers le deuxième réacteur et le maintenir fonctionnant pendant 30 minutes - 1 heure à 70-90 °C,
• Refroidir le deuxième réacteur jusqu'à ce qu'il descende à 20-50 °C, ajouter et mélanger l'agent antibactérien et le reste de la formule consistant en des infuseurs tensioactifs qui assurent la capacité de formation de film et commencer la filtration à cette température.
